# EUROPÄISCHE PATENTSCHRIFT

(11) **EP 0 831 652 B1**
(45) Veröffentlichungstag und Bekanntmachung des Hinweises auf die Patenterteilung: **07.01.2004**
(21) Anmeldenummer: 97111460.8
(22) Anmeldetag: 07.07.1997
(51) Int. Cl.: H04N 7/088

(54) **Fernsehempfänger mit Teletextverarbeitung**
Television device with processing of teletext
Récepteur de télévision avec traitement de télétexte

(30) Priorität: 20.09.1996 DE 19638641
(43) Veröffentlichungstag der Anmeldung: 25.03.1998
(73) Patentinhaber: Micronas Munich GmbH, 81541 München (DE)
(72) Erfinder: Bartholomä, Thomas, 81671 München (DE); Rössler, Werner, 85375 Neufahrn (DE)
(74) Vertreter: Patentanwälte Westphal, Mussgnug & Partner

(56) Entgegenhaltungen:
- EP-A- 0 145 677
- EP-A- 0 379 252
- WO-A-86/06238

## Beschreibung

Die Erfindung betrifft einen Fernsehempfänger mit Teletextverarbeitung gemäß den Merkmalen des Oberbegriffs des Patentanspruchs 1.

In heutigen Fernsehempfänger mit Teletextverarbeitung sind verschiedene Bedienungshilfen vorgesehen, um die Auswahl von Teletextseiten zu erleichtern. Bei TOP- oder FLOF-Teletext wird senderseitig Zusatzinformation übertragen, um die Vielzahl der empfangbaren Teletextseiten zu strukturieren. Empfängerseitig werden dem Bediener am Bildschirm ausgehend von dieser Zusatzinformation verschiedene Seitennummern oder Inhaltsthemen, die mit Seitennummern gekoppelt sind, vorgeschlagen, so daß er dadurch eine weitere Seite aufrufen kann, ohne umständlich die drei Ziffern der Teletextseitennummer eingeben zu müssen. Bei einer anderen als sogenanntes Page-Catching bezeichneten Methode werden in einer angezeigten Teletextseite Kombinationen aus Ziffern, die eine Teletextseitennummer bedeuten könnten, markiert, um den Bediener den Aufruf zu dieser Seite zu ermöglichen, wiederum ohne daß die Ziffern der tatsächlichen Teletextseitennummer eingegeben werden müssen.

Problematisch bei diesen Bedienungshilfen ist, daß sie nur vorwärts gerichtet sind. Wünscht der Bediener, eine bereits unmittelbar vorher oder länger zurückliegend angezeigte Seite noch einmal zu sehen, muß die Seitennummer eingetippt werden. Dies erfordert erhöhte Aufmerksamkeit, da sich der Bediener die Seitennummer merken muß.

In der EP-A-0 145 677 ist ein Fernsehgerät mit einer Fernbedienung beschrieben, bei der Vorzugsseiten abgespeichert werden. Hierzu muß der Bediener die Ziffernfolge einer Seitennummer über die Tastatur der Fernbedienung eingeben, anschließend eine Speichertaste drücken und anschließend eine Taste für eine spezielle Speicherzelle, in der die Teletextseitennummer schließlich abgespeichert wird. Mittels "+"- und "-"-Tasten kann der Benutzer innerhalb der gespeicherten Teletextseitennummern vorwärts- bzw. rückwärts blättern. Durch das Drücken der Speichertaste und die Zuordnung zu einem speziellen Speicherplatz ist dieses Vorgehen aufwendig und für ein spontanes Zurückblättern ungeeignet.

Die EP 379 252 beschreibt einen Fernsehempfänger mit einer Speicheranordnung für Seitennummer von bereits betrachteten Teletextseiten, um bereits betrachtete Teletextseiten ohne Wartezeit nochmals betrachten zu können. Die Teletextseiten werden dabei in der Reihenfolge ihrer Betrachtung in den Speicher abgelegt, wobei beim Abspeichern einer neuen Seite die bereits am längsten in dem Speicher vorhandene Seite aus dem Speicher geschoben wird, um sicherzustellen, dass stets die aktuellsten Teletextseiten in dem Speicher abgelegt sind.

Die Aufgabe der Erfindung besteht darin, eine Realisierung für einen Fernsehempfänger mit Teletextverarbeitung anzugeben, um ein einfaches Zurückblättern in bereits angezeigten Teletextseiten zu ermöglichen.

Erfindungsgemäß wird diese Aufgabe durch einen Fernsehempfänger nach den Merkmalen des Patentanspruchs 1 gelöst.

Im Stapelspeicher des erfindungsgemäßen Fernsehempfängers werden die Seitennummern der vorhergehend vom Bediener aufgerufenen Teletextseiten in der aufgerufenen Reihenfolge abgespeichert. Dies erfolgt sowohl bei der tatsächlichen Eingabe der Ziffern einer Teletextseite über die Tastatur des Bedienelements, z.B. einer Fernbedienung, als auch beim Aufruf einer Teletextseite mittels einer der oben beschriebenen Bedienungshilfen. Die Seitennummern werden dabei automatisch ohne zusätzliche Tastenbetätigung gespeichert. Mittels einer "Zurück"-Taste der Fernbedienung steht die gespeicherte Folge der Teletextseitennummern dem Bediener abrufbar zur Verfügung.

Pro Seitennummer einschließlich einer Unterseitennummer sind drei Byte Speicherkapazität erforderlich. Vorzugsweise wird für die jüngsten Seitenaufrufe, beispielsweise die gerade angezeigte Seite sowie die unmittelbar vorher angezeigte Seite, auch der Inhalt selbst der Teletextseite gespeichert. Die Anzahl der speicherbaren Teletextseiteninhalte hängt von der verfügbaren Speicherkapazität ab.

Zweckmäßigerweise wird der Stapelspeicher als Last-In-First-Out-Speicher organisiert. Zu dessen Realisierung eignet sich eine Ringstruktur. Dies bedeutet, daß der erste und der letzte Speicherplatz im Adreßraum des Stapelspeichers logisch nebeneinander liegen. Ein Zeiger auf eine der Speicherstellen mit einer Seitennummer gibt die aktuelle Anfangsposition des Stapelspeichers und folglich die Seitennummer der gerade angezeigten Seite an.

Nachfolgend wird die Erfindung anhand des in der Zeichnung dargestellten Ausführungsbeispiels näher erläutert. Es zeigen:
- Figur 1: ein Prinzipschaltbild eines Teils eines Fernsehempfängers mit einem Teletextprozessor und einer Fernbedienung,
- Figur 2: verschiedene Speicherbelegungen des Statusspeichers in einem Ausführungsbeispiel und
- Figur 3: ein Beispiel für einen als Ringstruktur realisierten Stapelspeicher.

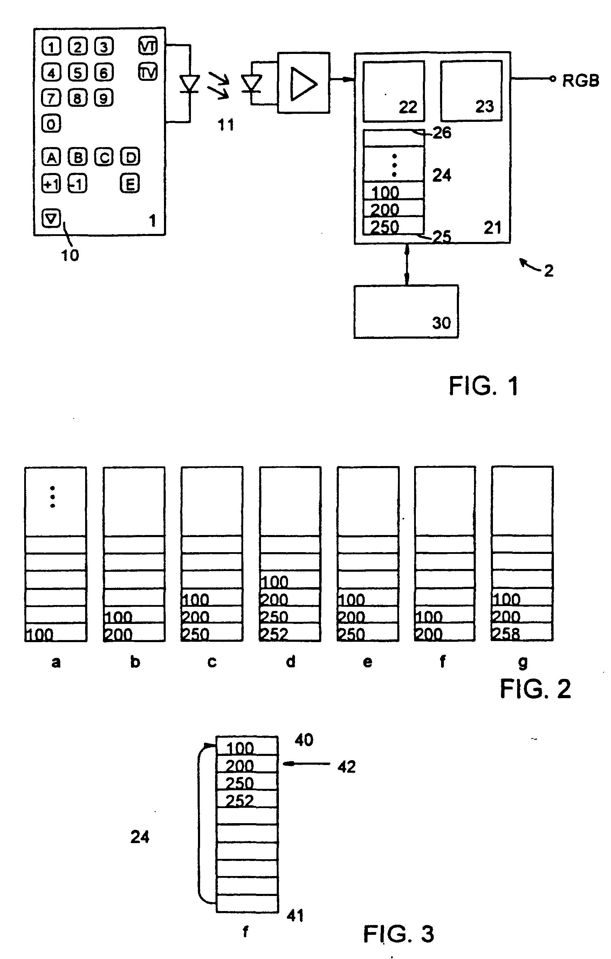

In Figur 1 ist eine Fernbedienung 1 dargestellt sowie ein Ausschnitt 2 aus einem Fernsehgerät. Die Fernbedienung 1 enthält wie üblich Zifferntasten zur Kanalwahl bzw. zur Eingabe einer Teletextseitennummer, eine Taste VT zum Umschalten in den Videotextmodus, eine Taste TV zum Abschalten des Videotextmodus und Rückschalten in den Normalbetrieb und Tasten zur Bedienungssteuerung im Videotextbetrieb. Letztere Tasten sind beispielsweise eine "+1"-Taste und eine "-1"-Taste zum Inkrementieren bzw. Dekrementieren der aktuell eingestellten Seitennummer um +/-1. Außerdem sind Tasten A, B, C, D vorhanden, mit denen vier über TOP oder FLOF angebotene Seiten aufgerufen werden können. Eine Taste E dient zum Weiterspringen zwischen den bei Page-Catching markierten Seitennummern.

Erfindungsgemäß weist die Fernbedienung 1 eine Taste 10 auf, durch die vorher aufgrund einer Benutzereingabe angezeigte Teletextseiten nochmals angezeigt werden können. Wird die Taste 10 ein erstes Mal betätigt, wird die unmittelbar vorher angezeigte Seite wiedergegeben. Beim zweiten Drücken der Taste 10 wird die nächstältere Seite wieder am Bildschirm angezeigt usw.

Die Fernbedienbefehle werden über eine Infrarotsteuerung 11 an das Fernsehgerät 2 übertragen. Dort ist ein Videotextdecoder 21 vorgesehen, der die auf Videotext bezogenen Fernbedienbefehle auswertet. Der Videotextdecoder 21 enthält eine Steuerungseinheit 22, beispielsweise einen CPU-Rechnerkern. Ein Displaygenerator 23 erzeugt ein RGB-Ausgangssignal zur Ansteuerung der Bildröhre. Ein Stapelspeicher 24 speichert die Seitennummern, deren Anzeige vorher durch eine Benutzereingabe über die Fernbedienung veranlaßt wurde. Die Benutzereingabe kann unter anderem die tatsächliche Eingabe der einzelnen Ziffern der Seitennummer sein oder die Betätigung einer der Funktionstasten A...E oder der Tasten +1/-1. Beim Zurückblättern mittels der Taste 10 wird die Seitennummer der daraufhin angezeigten Teletextseite nicht erneut in den Stapelspeicher 24 eingetragen.

Die Seitennummern im Stapelspeicher können auch eine Unterseitennummer umfassen. Es sind dann bekanntlich 3 Byte erforderlich, um die vollständige Kombination aus Seitennummer und Unterseitennummer zu speichern. Der Speicher 24 ist als Stapelspeicher ausgeführt, indem eine neu aufzunehmende Seitennummer am Anfang 25 des Stapelspeichers eingefügt wird und die bereits vorhandenen Einträge um eine Speicherstelle nach oben in Richtung Stapelende 26 verschoben werden. Ist der Speicher bis zum Stapelende 26 gefüllt, gehen die nach oben geschobenen Seitennummern verloren. Beim Drücken der Taste 10 wird die zuunterst enthaltene Seitennummer, z.B. 250, deren Inhalt gerade angezeigt wird, aus dem Speicher entfernt, die übrigen Seitennummern werden um eine Speicherstelle nach unten verschoben. Es wird dann die vorher angezeigte Seite 200 am Bildschirm dargestellt. Der Speicher ist folglich als Last-In-First-Out-Speicher organisiert.

In einem weiteren Speicher 30, der zur Aufnahme des tatsächlichen Inhalts von Teletextseiten dient, werden Seiteninhalte einer Anzahl von Teletextseiten, deren Seitennummer im Stapelspeicher 24 gespeichert ist, zwischengespeichert. Zumindest wird der Inhalt der gerade angezeigten Seite und der unmittelbar vorhergehenden Seite gespeichert. Beim Drücken der Taste 10 ist dann die vorhergehende Seite sofort abrufbar. Zweckmäßigerweise werden dann vorsorglich die Inhalte der sich im Stapelspeicher 24 anschließenden nächst älteren Seitennummern akquiriert, so daß sie gegebenenfalls bei einem Zurückblättern wiederum schnell zur Verfügung stehen. Beim Drücken der Taste 10 wird die Seitennummer 200 an die Steuerungseinheit 22 übertragen, die nach im Teletextprozessor üblichen Suchverfahren im Speicher 30 den dort gespeicherten Seiteninhalt der Seite 200 sucht.

In der Figur 2 sind verschiedene Phasen a...g während des Betriebs der Schaltung der Figur 1 durch den Inhalt des Stapelspeichers 24 dargestellt. Bei a wird die Seite 100 angezeigt. Die Seitennummer 100 steht deshalb in der untersten Speicherzelle am Anfang des Stapelspeichers. Bei b wird die Seite 200 angezeigt; diese steht nun in der untersten Speicherstelle, die Seitennummer 100 der vorher angezeigten Seite ist um eine Speicherstelle nach oben verschoben. Bei c wird die Seite 250 angezeigt. Bei d wird die Seite 252 angezeigt. Der Benutzer möchte nun zu der zwei Schritte vorher dargestellten Seite 200 zurückkehren, da die Seite 200 beispielsweise eine Inhaltsübersicht enthält. Im Schritt e wurde die Taste 10 einmal gedrückt, so daß die unmittelbar vorher angezeigte Seite 250 wieder dargestellt wird. Bei f wurde die Taste 10 ein zweites Mal gedrückt, so daß nun die gewünschte Seite 200 angezeigt wird. Im folgenden bei g hat der Bediener die Seitennummer 258 für die nächste anzuzeigende Seite eingegeben.

In Figur 3 ist eine für die Realisierung des Stapelspeichers 24 geeignete Struktur dargestellt. Der Stapelspeicher ist als Ringspeicher ausgeführt; dies bedeutet, daß die erste Speicherstelle 40 und die letzte Speicherstelle 41 im Stapelspeicher logisch nebeneinander liegen. Die Speicherstelle 40 ist also die der Speicherstelle 41 logisch nachfolgende Speicherstelle. Ein Zeiger 42 gibt die aktuelle Position des Stapelanfangs an. Der Stapelspeicher enthält wie dargestellt die Seitennummern 200, 100. Wird eine neue Zahl eingeschrieben, wird der Zeiger 42 zum Ende 41 hin verschoben und in diese nächste Speicherstelle die neue Seitennummer eingeschrieben. Die bisher dort gespeicherte Seitennummer 250 wird überschrieben. Der in Figur 3 dargestellte Speicherinhalt der Ringstruktur entspricht der Phase f in Figur 2. Wenn der Zeiger 42 bei der Speicherstelle 41 angekommen ist und der Bediener eine weitere Seitennummer aufruft, geht der Zeiger 42 zur Speicherstelle 40 über und beschreibt den Ringspeicher von vorne an von neuem.

## Patentansprüche

1. Fernsehempfänger mit Teletextverarbeitung, bei dem ein Teletextdekoder (2) zum Empfang und zur Anzeige von durch je eine Teletextseitennummer identifizierbaren Teletextseiten vorgesehen ist, die Teletextseitennummern durch ein Bedienelement (1) mittels einer Benutzereingabe erzeugbar sind, der Teletextdekoder (2) einen Speicher (24) enthält, um Teletextseitennummern zu speichern, und das Bedienelement eine Bedientaste (10) umfasst, durch die je eine der Teletextseitennummern abrufbar und die zugeordnete Seite zur Anzeige bringbar ist, wobei der Speicher (24) ein Stapelspeicher ist und dazu ausgebildet ist, die Seitennummern von vom Benutzer mittels des Bedienelements (1) zur Anzeige veranlassten verschiedenen Teletextseiten in der Reihenfolge von deren Anzeige zu speichern,
**dadurch gekennzeichnet, dass**
durch eine Betätigung der Bedientaste (10) bewirkt wird, dass die an letzter Stelle gespeicherte Seitennummer aus dem Speicher (24) entfernt wird und die Teletextseite, deren Seitennummer an vorletzter Stelle der Reihenfolge gespeichert ist, zur Anzeige gebracht wird.

2. Fernsehempfänger nach Anspruch 1,
**dadurch gekennzeichnet, daß**
der Stapelspeicher (24) als Last-In-First-Out-Speicher organisiert ist.

3. Fernsehempfänger nach einem der Ansprüche 1 oder 2,
**dadurch gekennzeichnet, daß**
in den Stapelspeicher (24) am Stapelende (25) die Seitennummer einer Teletextseite geschrieben wird, wenn sie zur Anzeige gebracht wird, wobei die Anzeige nicht durch eine Betätigung der Bedientaste (10) veranlaßt wurde, und daß aufgrund der Betätigung der Bedientaste (10) die am Stapelende (25) gespeicherte Seitennummer gelöscht wird.

4. Fernsehempfänger nach einem der Ansprüche 1 bis 3,
**dadurch gekennzeichnet, daß**
der Speicher (24) eine Ringstruktur aufweist, und daß ein Zeiger (42) vorgesehen ist, der den Speicherplatz mit der Seitennummer der gerade angezeigten Seite kennzeichnet, wobei der Zeiger (42) beim Anzeigen einer neuen Seite um einen Speicherplatz vorwärts bewegt wird und an diesem Speicherplatz die Seitennummer der neuen Seite gespeichert wird und der Zeiger durch Betätigung der Bedientaste (10) um einen Speicherplatz rückwärts bewegt wird und die Teletextseite der dort gespeicherten Seitennummer angezeigt wird.

5. Fernsehempfänger nach einem der Ansprüche 1 bis 4,
**dadurch gekennzeichnet, daß**
der Seiteninhalt mindestens der beiden im Speicher (24) am Stapelende (25) gespeicherten Seite in einem Speicher (30) zum Speichern des Teletextseiteninhalts gespeichert ist.

## Claims

1. A television receiver having teletext processing, in which a teletext decoder (2) is provided to receive and to display teletext pages each identifiable by a teletext page number, the teletext page numbers can be generated by a control device (1) by means of user input, the teletext decoder (2) contains a memory (24) for storing teletext page numbers, and the control device comprises a control key (20) by which one of the teletext page numbers can be retrieved and the associated page can be displayed, wherein the memory (24) is a stack memory and is designed to store the page numbers of various teletext pages displayed as a result of the user operating the control device (1) in the sequence of their being displayed,
**characterised in that** an actuation of the control key (10) causes the page number stored at the last position to be removed from the memory (24) and the teletext page whose page number is stored at the penultimate position of the sequence to be displayed.

2. A television receiver according to Claim 1,
**characterised in that** the stack memory (24) is organised as a last-in first-out memory.

3. A television receiver according to one of Claims 1 or 2,
**characterised in that** the page number of a teletext page is written into the stack memory (24) at the stack end (25) when it is displayed, the display not being caused by an actuation of the control key (10), **and in that** the page number stored at the stack end (25) is deleted on the basis of the actuation of the control key (10).

4. A television receiver according to one of Claims 1 to 3,
**characterised in that** the memory (24) comprises a ring structure,
**and in that** a pointer (42) is provided which identifies the memory location with the page number of the page just displayed, the pointer (42) being moved forwards by one memory location when displaying a new page and the page number of the new page being stored at this memory location and the pointer being moved backwards by one memory location by actuating the control key (10) and the teletext page of the page number stored there being displayed.

5. A television receiver according to one of Claims 1 to 4,
**characterised in that** the page content of at least the two pages stored in the memory (24) at the stack end (25) is stored in a memory (30) for storing the teletext page content.

## Revendications

1. Récepteur de télévision avec traitement de télétexte, dans lequel il est prévu un décodeur de télétexte (2) pour la réception et pour l'affichage de pages de télétexte identifiables chacune par un numéro de page de télétexte, les numéros de pages de télétexte peuvent être produits par un élément de commande (1) au moyen d'une entrée de l'utilisateur, le décodeur de télétexte (2) contient une mémoire (24) pour mémoriser des numéros de pages de télétexte, et l'élément de commande comprend une touche de commande (10), par laquelle on peut appeler chacun des numéros de pages de télétexte et amener la page correspondante à l'affichage, dans lequel la mémoire (24) est une mémoire par lots et est formée pour mémoriser, dans l'ordre de leur affichage, les numéros de pages de pages de télétexte amenées à l'affichage par l'utilisateur au moyen de l'élément de commande (1),
**caractérisé en ce qu'**
une activation de la touche de commande (10) entraîne que le numéro de page mémorisé au dernier emplacement soit enlevé hors de la mémoire (24) et la page de télétexte, dont le numéro de page est mémorisé dans l'avant-dernier emplacement de la série, soit amenée à l'affichage.

2. Récepteur de télévision selon la revendication 1,
**caractérisé en ce que**
la mémoire par lots (24) est organisée en une mémoire Last-In-First-Out.

3. Récepteur de télévision selon l'une quelconque des revendications 1 ou 2,
**caractérisé en ce que**
le numéro de page d'une page de télétexte est écrit dans la mémoire par lots (24) à la fin de la pile (25) lorsqu'il est amené à l'affichage, l'affichage n'ayant pas été provoqué par une activation de la touche de commande (10), et le numéro de page mémorisé à la fin de la pile (25) est effacé par suite de l'activation de la touche de commande (10).

4. Récepteur de télévision selon l'une quelconque des revendications 1 à 3,
**caractérisé en ce que**
la mémoire (24) présente une structure annulaire, et il est prévu un pointeur (42) qui désigne l'emplacement de mémoire avec le numéro de page de la page précisément affichée, le pointeur (42) étant déplacé d'un emplacement de mémoire vers l'avant lors de l'affichage d'une nouvelle page pour mémoriser le numéro de page de la nouvelle page dans cet emplacement de mémoire, et le pointeur étant déplacé d'un emplacement de mémoire vers l'arrière par l'activation de la touche de commande (10) pour afficher la page de télétexte du numéro de page mémorisé ici.

5. Récepteur de télévision selon l'une quelconque des revendications 1 à 4,
**caractérisé en ce que**
le contenu de page au moins des deux pages mémorisées dans la mémoire (24) à la fin de la mémoire (25) est mémorisé dans une mémoire (30) destinée à stocker le contenu des pages de télétexte.
